# EUROPÄISCHE PATENTSCHRIFT

(11) **EP 0 949 468 B1**
(45) Veröffentlichungstag und Bekanntmachung des Hinweises auf die Patenterteilung: **09.07.2003**
(21) Anmeldenummer: 99106888.3
(22) Anmeldetag: 07.04.1999
(51) Int. Cl.: F25D 11/02, F25D 17/06, F25D 29/00

(54) **Verfahren zur Steuerung eines Kältegerätes**
Refrigerator control method
Procédé de commande pour réfrigérateur

(30) Priorität: 07.04.1998 DE 19815642
(43) Veröffentlichungstag der Anmeldung: 13.10.1999
(73) Patentinhaber: BSH Bosch und Siemens Hausgeräte GmbH, 81669 München (DE)
(72) Erfinder: Guffler, Thomas Dipl.-Ing., 89426 Wittislingen (DE); Joksch, Harald Dipl.-Ing., 89269 Vöhringen (DE)

(56) Entgegenhaltungen:
- WO-A-96/16364
- DE-A- 3 904 216
- US-A- 5 355 686
- US-A- 5 711 159

## Beschreibung

Die Erfindung betrifft ein Verfahren zur Steuerung eines Kältegerätes mit wenigstens zwei thermisch voneinander getrennten Kältefächem unterschiedlicher Fachtemperatur und mit einem Verdichter, welcher wenigstens zwei in Reihenschaltung hintereinander angeordnete, zur Kühlung der Kältefächer dienende Verdampfer mit Kältemittel beaufschlägt und welcher von einem in einem Kältefach höherer Temperatur angeordneten Reglerelement zur Aufrechterhaltung der bestimmungsgemäßen Fachtemperatur gesteuert ist, wobei die Fachtemperatur im Kältefach höherer Temperatur von einem die Kühlluft darin umwälzenden Ventilator beeinflußbar ist.

Aus der DE-PS 41 32 719 ist ein mit einer Einkreiskältemaschine ausgestatteter Mehrtemperaturenkühlschrank bekannt, in dessen von einem sogenannten "Cold-Wall-Verdampfer" gekühlten Kühlfach ein Ventilator zur Umwälzung der Kühlfachluft vorgesehen ist. Der Ventilator ist dabei durch einen die Umgebungstemperatur des Kühlgerätes erfassenden Temperatursensor gesteuert, welcher bei einem Anstieg der Umgebungstemperatur über die normale Raumtemperatur von beispielsweise 20° über einen Schalter den Stromkreis zum Lüfter schließt. Durch eine derartige Maßnahme ist es möglich, das Kühlgerät auch bei tropischen oder subtropischen Umgebungsbedingungen innerhalb seiner bestimmungsgemäßen Kühlfachtemperaturen zu betreiben, da durch den die Kühlfachluft umwälzenden Ventilator die Kälteleistung infolge eines verbesserten Wärmeübergangs durch die Erhöhung der Wärmeübergangszahl erreicht ist. Allerdings bringt eine Ventilatorsteuerung über einen die Umgebungstemperatur erfassenden Temperaturfühler mit sich, daß der Ventilator stets in Betrieb gesetzt ist, wenn die Schalttemperatur des Temperaturfühlers überschritten ist, aber die Reglerstellung des primär die Kühlfachtemperatur regelnden Reglers auf höhere Kühlfachtemperaturen eingestellt ist und aufgrund dieser Reglerstellung ein Ventilatorbetrieb zur Erreichung der bestimmungsgemäßen Kühlfachtemperatur in der Regel nicht notwendig ist. Darüber hinaus kann es bei diesem Stand der Technik auch vorkommen, daß bedingt durch die gegenüber der Schalttemperatur zurückbleibende Umgebungstemperatur der Ventilator nicht in Betrieb genommen ist und gleichzeitig das Kühlfach mit frischem Lagergut befüllt ist, welches rasch auf die bestimmungsgemäße Lagertemperatur heruntergekühlt werden soll.

Der Erfindung liegt die Aufgabe zugrunde, das Verfahren gemäß dem Oberbegriff des Anspruches 1 gegenüber dem Stand der Technik mit einfachen Maßnahmen zu verbessem.

Diese Aufgabe wird gemäß der Erfindung dadurch gelöst, daß eine elektronische Ansteuereinheit vorgesehen ist, welche wenigstens einen in einem Datenspeicher hinterlegten Sollwert mit einem sich aus der Betriebsweise des Verdichters ergebenden Istwert vergleicht und beim Unter- oder Überschreiten des Sollwertes ein Steuersignal abgibt, durch welches der Ventilator in Betrieb gesetzt ist.

Die Inbetriebnahme des Ventilators ist erfindungsgemäß ausschließlich auf Belastungsgrößen des Verdichters wie die Laufzeit, die Stehzeit oder die sich aus dem Verhältnis der Laufzeit zu der Summe aus Laufzeit und Stehzeit ergebende relative Einschaltdauer (RED) abgestellt. Diese Größen erlauben einen unmittelbaren Aufschluß über die generellen Einsatzbedingungen des Kältegerätes, wie beispielsweise die Umgebungstemperatur aber auch über den momentanen Belastungsfall des Kühlfaches z.B. infolge frisch eingelagerten Gutes, so daß die Ansteuerung des Ventilators aufgrund der Auswertung dieser Belastungsgrößen ausschließlich bedarfsgerecht erfolgt und somit auch in Hinsicht auf die Reglereinstellung des Temperaturreglers im Kühlfach ein unnötiger Ventilatorbetrieb vermieden ist. Darüber hinaus ist durch die ausschließliche Abstellung des Ventilatorbetriebes auf die Verdichterbelastungsgrößen durch deren Auswertung die Möglichkeit bereit gestellt, das Herunterkühlen von frisch eingelagertem Lagergut im Kühlfach durch ein Zuschalten des Ventilators wirkungsvoll zu unterstützen, so daß die an sich durch die Einlagerung von frischem Lagergut gegebenen unerwünscht langen Laufzeiten des Verdichters deutlich verkürzt sind.

Durch die erfindungsgemäße Ansteuerung des Ventilators sind die bestimmungsgemäßen Fachtemperaturen einer Kühl-Gefrierkombination auch bei tropischen oder subtropischen Umgebungsbedingungen sicher gewährleistet.

Nach einer bevorzugten Ausführungsform des Gegenstandes der Erfindung ist vorgesehen, daß die Ansteuereinheit bei der Auswertung der Betriebsweise des Verdichters dessen Laufzeit aufsummiert und bei Überschreiten des Sollwertes durch den aufsummierten Wert den Ventilator zu seiner Inbetriebnahme ansteuert.

Durch die Analyse der Verdichterlaufzeit läßt sich auf einfache Weise ohne Beachtung weiterer Kältegerätewerte unmittelbar auf den Kältebedarf der Kältefächer schließen und somit zur Erreichung der bestimmungsgemäßen Kühlfachtemperatur der Ventilator zielgerichtet zu seiner Inbetriebnahme ansteuern.

Entsprechend einer weiteren bevorzugten Ausführungsform des Gegenstandes der Erfindung ist vorgesehen, daß die Ansteuereinheit den Ventilator bei der um einen Zeitabschnitt erhöhten Verdichterlaufzeitsumme im Ein-Ausschaltbetrieb ansteuert.

Eine derartige Ansteuerung des Ventilators ist insbesondere bei einem langandauernden Verdichterlauf vorteilhaft, da beide Kältefächer z.B. das Kühl- als auch das Gefrierfach mit einer zur Aufrechterhaltung ihrer bestimmungsgemäßen Fachtemperatur ausreichenden Kälteleistung beaufschlagt sind und zugleich das bei einem andauernden Ventilatorbetrieb zwangsweise Ansteigen der Gefrierfachtemperatur auf unzulässig hohe Werte sicher vermieden ist.

Gemäß einer weiteren bevorzugten Ausführungsform des Gegenstandes der Erfindung ist vorgesehen, daß die vorbestimmte Verdichterlaufzeitsumme in einem Bereich zwischen 50 und 70 Minuten liegt, aber vorzugsweise 60 Minuten beträgt.

Eine Ansteuerung des Ventilators in Abhängigkeit dieser Verdichterlaufzeiten hat sich als besonders zweckmäßig erwiesen.

Als besonders zweckmäßig hat sich eine Taktzeit für den Ein-und Ausschaltbetrieb des Ventilators erwiesen, wenn nach einer nächsten bevorzugten Ausführungsform des Gegenstandes der Erfindung vorgesehen ist, daß der Ventilator im Ein- und Ausbetrieb mit einer Taktzeit zwischen 10 und 20 Minuten angesteuert ist, die Taktzeit aber vorzugsweise 15 Minuten beträgt

Gemäß einer letzten bevorzugten Ausführungsform des Gegenstandes der Erfindung ist vorgesehen, daß der Ventilator durch die Ansteuereinheit zumindest annähernd zeitgleich mit dem Verdichter abgeschaltet wird.

Durch diese Maßnahme ist verhindert, daß sich die Stehzeit des Verdichters verkürzt, so daß nicht nur ein unnötiger Energieaufwand, sondern auch eine zu tiefe Temperatur im Kühlfach die Folge wäre.

Die Ansteuerung des Ventilators in Abhängigkeit der durch eine elektronische Auswerteeinheit ermittelten Betriebsweise des Verdichters, z.B. seiner Laufzeit, macht es möglich, daß beispielsweise als Kühl- und Gefrierkombinationen ausgebildete Kältegeräte auch bei hohen Umgebungstemperaturen bis zu 38°C (entspricht der Klimaklasse subtropisch) funktionssicher einsetzbar sind, wobei dabei zugleich die dem Stand der Technik anhaftenden Nachteile, nämlich die unnötige Ansteuerung des Ventilators im Kühlfach, wenn sich der Temperaturregler in seiner Reglerstellung "Warm'' befindet und das Kühlfach somit an sich entsprechend der Reglerstellung mit ausreichender Kälteleistung beaufschlagt ist, vermieden sind. Die ausschließliche Abstellung des Ventilatorbetriebes auf die den Verdichterbetrieb kennzeichnenden Größen ermöglicht es beispielsweise, daß der Ventilator zielgerichtet nach Ablauf einer bestimmten Verdichterlaufzeit zur Verbesserung des sich nach der Formel Q=α·A·ΔT errechnenden Wärmeübergangs automatisch durch die Ansteuereinheit in Betrieb gesetzt ist. Auf diese Weise trägt der Ventilator in Abhängigkeit der am Verdichter auftretenden Belastung, beispielsweise hervorgerufen durch die das Kältegerät umgebende Atmosphäre oder die Einlagerung von frischem Kühlgut in eines der Lagerfächer, wesentlich dazu bei, daß die bestimmungsgemäßen Kühlfachtemperaturen bei optimierten Verdichterlaufzeiten durch die Erhöhung der Kälteleistung eingehalten sind.

Neben der Auswertung der Verdichterlaufzeit zur Ansteuerung des Ventilators ist es auch möglich, anstelle dieser die Stehzeit oder die relative Einschaltdauer zur Ansteuerung heranzuziehen.
Q = übertragene Kälteleistung in W
α = Wärmeübergangszahl in W/m²K
A = Verdampferfläche in m²
ΔT= Temperaturdifferenz in K

## Patentansprüche

1. Verfahren zur Steuerung eines Kältegerätes mit wenigstens zwei thermisch voneinander getrennten Kältefächern unterschiedlicher Fachtemperatur und mit einem Verdichter, welcher wenigstens zwei in Reihenschaltung hintereinander angeordnete, zur Kühlung der Kältefächer dienende Verdampfer mit Kältemittel beaufschlägt und welcher von einem in einem Kältefach höherer Temperatur angeordneten Reglerelement zur Aufrechterhaltung der bestimmungsgemäßen Fachtemperatur gesteuert ist, wobei die Fachtemperatur im Kältefach höherer Temperatur von einem die Kühlluft darin umwälzenden Ventilator beeinflußbar ist, **dadurch gekennzeichnet, daß** eine elektronische Ansteuereinheit vorgesehen ist, welche wenigstens einen in einem Datenspeicher hinterlegten Sollwert mit einem sich aus der Betriebweise des Verdichters ergebenden Istwert vergleicht und beim Unter- oder Überschreiten des Sollwertes ein Steuersignal abgibt, durch welches der Ventilator in Betrieb gesetzt ist.

2. Verfahren nach Anspruch 1, **dadurch gekennzeichnet, daß** die elektronische Ansteuereinheit bei der Auswertung der Betriebsweise des Verdichters dessen Laufzeit aufsummiert und bei Überschreiten des Sollwertes durch den aufsummierten Wert den Ventilator zu seiner Inbetriebnahme ansteuert.

3. Verfahren nach einem der Ansprüche 1 oder 2, **dadurch gekennzeichnet, daß** die Ansteuereinheit den Ventilator bei der um einen vorbestimmten Zeitabschnitt erhöhten Verdichterlaufzeitsumme im Ein-Ausschaltbetrieb ansteuert.

4. Verfahren nach Anspruch 3, **dadurch gekennzeichnet, daß** die vorbestimmte Verdichterlaufzeitsumme in einen Bereich zwischen 50 und 70 Minuten liegt, aber vorzugsweise 60 Minuten beträgt.

5. Verfahren nach Anspruch 3, **dadurch gekennzeichnet, daß** der Ventilator im Ein-Ausschaltbetrieb mit einer Taktzeit zwischen 10 Minuten und 20 Minuten angesteuert ist, die Taktzeit aber vorzugsweise 15 Minuten beträgt.

6. Verfahren nach einem der Ansprüche 1 bis 5, **dadurch gekennzeichnet, daß** der Ventilator durch die Ansteuereinheit zumindest annähernd zeitgleich mit dem Verdichter abgeschaltet wird.

## Claims

1. Method of controlling a refrigerating appliance with at least two refrigerating compartments, which are thermally separated from one another, of different compartment temperature and with a compressor which acts by refrigerant on at least two evaporators, which are arranged one after the other in series connection and serve for cooling the refrigerating compartments, and which are controlled by a regulator element, which is arranged in a refrigerating compartment of higher temperature, for maintenance of the intended compartment temperature, wherein the compartment temperature in the refrigerating compartment of higher temperature can be influenced by a fan circulating the cooling air therein, **characterised in that** an electronic control unit is provided which compares at least one target value, which is filed in a data store, with an actual value resulting from the mode of operation of the compressor and delivers a control signal, by which the fan is set into operation, when the target value is fallen below or exceeded.

2. Method according to claim 1, **characterised in that** the electronic control unit in the case of evaluating the operation of the compressor summates the running time thereof and in the case of exceeding the target value by the summated value controls the fan for entry thereof into operation.

3. Method according to one of claims 1 and 2, **characterised in that** the control unit controls the fan in an on/off switching operation in the case of the compressor running time sum increased by a predetermined time segment.

4. Method according to claim 3, **characterised in that** the predetermined compressor running time sum lies in a region between 50 and 70 minutes, but preferably 60 minutes.

5. Method according to claim 3, **characterised in that** the fan is controlled in on/off switching operation at a cycle time between 10 minutes and 20 minutes, the cycle time preferably amounting to 15 minutes.

6. Method according to one of claims 1 to 5, **characterised in that** the fan is switched off by the control unit at least approximately simultaneously with the compressor.

## Revendications

1. Procédé de commande d'un réfrigérateur avec au moins deux compartiments froids thermiquement distincts l'un de l'autre de température de compartiment différente et avec un compresseur, lequel applique un fluide frigorigène à au moins deux évaporateurs disposés l'un derrière l'autre en montage en série, servant au refroidissement des compartiments froids et lequel est commandé par un élément de réglage disposé dans un compartiment froid de température plus élevée pour maintenir la température du compartiment en conformité avec sa spécification, la température du compartiment dans le compartiment froid de température plus élevée pouvant être influencée par un ventilateur faisant circuler de l'air froid à l'intérieur, **caractérisé en ce qu'**une unité de commande électronique est prévue, laquelle compare au moins une valeur de consigne déposée dans une mémoire d'informations à une valeur effective résultant du mode de fonctionnement du compresseur et délivre, en cas d'infériorité à la valeur de consigne ou de dépassement de celle-ci, un signal de commande par lequel le ventilateur est mis en service.

2. Procédé selon la revendication 1, **caractérisé en ce que** l'unité de commande électronique lors de l'évaluation de la durée de fonctionnement du compresseur totalise sa durée de mise en circuit et, lorsque la valeur additionnée dépasse la valeur de consigne, amorce la mise en marche du ventilateur.

3. Procédé selon l'une des revendications 1 ou 2, **caractérisé en ce que** l'unité de commande amorce la mise en circuit et hors circuit du ventilateur avec la somme de la durée de mise en circuit du compresseur augmentée d'une période prédéterminée.

4. Procédé selon la revendication 3, **caractérisé en ce que** la somme prédéterminée de la durée de mise en circuit du compresseur se situe dans une fourchette comprise entre 50 et 70 minutes, mais est de préférence 60 minutes.

5. Procédé selon la revendication 3, **caractérisé en ce que** le ventilateur est commandé dans un fonctionnement de mise en circuit et hors circuit avec une durée de cycle comprise entre 10 minutes et 20 minutes, la durée de cycle étant cependant de préférence 15 minutes.

6. Procédé selon l'une des revendications 1 à 5, **caractérisé en ce que** le ventilateur est mis hors circuit par l'unité de commande au moins presque simultanément au compresseur.
